Europäisches Patentamt

(19) European Patent Office

Office européen des brevets

(11) Publication number : **0 469 708 A2**

# EUROPEAN PATENT APPLICATION

(21) Application number : 91305577.8

(51) Int. Cl.⁵ : **G01V 5/04**

(22) Date of filing : 20.06.91

(30) Priority : 20.06.90 US 540738

(43) Date of publication of application :
05.02.92 Bulletin 92/06

(84) Designated Contracting States :
DE FR GB NL

(71) Applicant : HALLIBURTON LOGGING
SERVICES, INC.
2135 Highway 6 South
Houston, Texas 77242 (US)

(72) Inventor : Jacobson, Larry A.
1610 Windsong
Richmond, Texas 77349 (US)
Inventor : Wyatt, Dennis F., Jr.
11811 N. Petersham
Houston, Texas 77031 (US)
Inventor : Gadeken, Larry L.
12819 Westleigh
Houston, Texas 77077 (US)
Inventor : Merchant, Gulamabbas
16011 Mission Village
Houston, Texas 77083 (US)

(74) Representative : Wain, Christopher Paul et al
A.A. THORNTON & CO. Northumberland
House 303-306 High Holborn
London WC1V 7LE (GB)

(54) Method and apparatus for presenting data from borehole logging.

(57) A data logging method and apparatus includes sensing a nuclear event and then filtering the sensor output to smooth and at least partially deconvolve it. The data is represented by count rates observed in the data, and preferably there is a high count rate. The preferred filter is a three point filter which is applied to the data whereby smoothing and deconvolution occur to present the output data.

EP 0 469 708 A2

NUCLEAR LOGGING TOOL

10

DEPTH MEASURING DEVICE

16

DEPTH SAMPLING OF COUNT RATES

FILTER SYSTEM

12

COUNT RATE PROCESSING SOFTWARE

RECORDER

14

FIG.1

This invention relates to a method and apparatus for presenting data from well borehole logging, and in particular for providing enhanced sensitivity in nuclear log measurements. In particular, it is useful for providing enhancement of especially thin bed boundaries so that they may be recognized, thereby enhancing the relative sensitivity.

As the search for producing formations continues unabated, there is a greater and greater need to recognize thinner and thinner producing strata. Completion techniques are dependent on accurately recognizing relative thin formations for production purposes. As the strata of interest become thinner, the difficulty in recognition becomes even greater. We have now found a way of enhancing data by processing of the data obtained from a variety of nuclear log measurements thereby facilitating recognition of thin strata. According to the present invention, there is provided a method of presenting data from a logging tool traversing a well borehole wherein sensor means in the tool measures nuclear events which are output in the form of counts relating to nuclear events and wherein the output is smoothed and deconvolved by a filter means.

The invention also includes apparatus for presenting a log of data along a well borehole comprising:

(a) sensor means for responding to nuclear events along a well borehole;

(b) filter means connected to the output of said sensor means for smoothing and partially deconvolving the data output from said sensor means as data smoothing occurs over a few feet of borehole.

The invention can be used with data provided by, for example, a natural gamma ray measuring tool, a gamma-gamma measuring tool, a neutron porosity measuring tool, or a pulsed neutron tool. The invention operates on the data so obtained to thereby enhance the data presentation to particularly be able to locate boundaries indicative of even thinner beds or formations of interest.

The invention is especially useful in a system in which data is collected along a length of well borehole derived from observed nuclear events wherein the data is used to obtain representations of adjacent formations and, in particular, to emphasize boundaries between very thin adjacent formations. These boundaries are more susceptible to loss in the data plus noise which is otherwise obtained from typical nuclear log measurement systems.

In the improved measurement processing system of the present invention, while the noise may be enhanced in some regards, nevertheless the data is spatially ,sharpened so that the final presentation of the data, albeit with some measure of enhanced noise, does not include unwanted artefacts such as ringing or extreme overshoots otherwise located at the bed boundaries. Boundaries are sharpened with a given or controlled measure of deconvolution. In effect, the present apparatus incorporates a serially connected data processing system having a simple combined smoothing filter and a deconvolver which is sufficiently uncomplicated that it is able to operate in real time, in part because it operates only over a few feet of logged data. It can be applied to any nuclear logging tool or it can be applied to other measuring devices which form an output based on observed events in measurement which are otherwise subject to error relating to noise.

In order that the invention may be more fully understood, embodiments thereof will now be described, by way of example only, with reference to the accompanying drawings, wherein:

Fig. 1 is a schematic block diagram of one embodiment of the present invention, showing a filter which operates on the nuclear logging tool data output as a function of depth and which forms an enhanced output;

Fig. 2(a) shows convolution of a waveform response with a particular form and the results;

Fig. 2(b) is a simple graph showing the sample intervals versus amplitude of a simplified spatial deconvolution filter;

Fig. 3 is a graph of the response and smoothing filter functions of an embodiment of apparatus of the invention for one foot (0.3m) spatial resolution during operation;

Figs. 4,5,6 and 7 show a simulated formation response with distortion wherein Fig. 4 shows the effect of a matched smoothing filter while Fig. 5 shows the same curve with a smoothing filter and deconvolver applied to noise free data; similarly, Fig. 6 shows the benefit of a matched smoothing filter while Fig. 7 is similar and shows the filter plus deconvolver on noisy data; and

Fig. 8 is a comparison of raw gamma ray data in the left trace, a smooth data presentation at the center trace, and a trace on the right which has been processed by smoothing and deconvolving in accordance with the present invention.

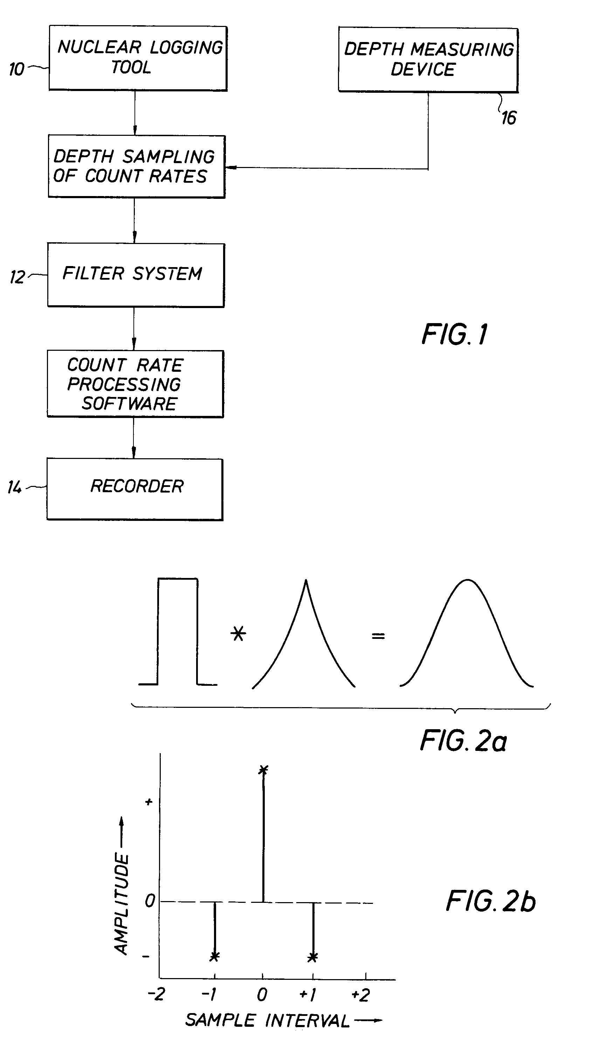

One depiction of this procedure is very generally set out in Fig. 1. In general terms, a nuclear logging tool is lowered in a well borehole and then retrieved. During retrieval, it is operated so that data is recorded. The data is recorded as a function of depth in the well borehole. One mode of operation is to measure the naturally occurring gamma radiation in the formations adjacent to the borehole. Another approach is to measure the response of the formations to pulsed neutron bombardment. In any event, the nuclear logging tool forms data output 10. Data are converted from a time sequence to a spatial sequence. This is provided to a filter system 12 (equation 3 below) in accordance with the teachings of the present disclosure which converts the data and provides it to the standard count rate processing software and hence to the recorder 14. A depth measuring device 16 is also incorporated so that the output is an enhanced log where the data is newly presented and is a function of depth in the borehole.

The present system provides vertically enhanced count rates $C_{enh}(i)$ as a function of the deconvolver g(i), a smoothing filter f(i) and the raw depth sampled data $C_{raw}(i)$, as set out in equation 1:

$$C_{enh}(i) = g(i) * f(i) - C_{raw}(i) \quad (1)$$

The deconvolver and smoothing filter can be combined as defined in equation 2:

$$h(i) = g(i) * f(i) = \sum_{j=-k}^{+k} g(j) f(i-j) \quad (2)$$

where k is defined by 2k+1 which is the total width of the deconvolver function illustrated in fig. 2(b) for three points. Then, one can write equation 1 as equation 3:

$$C_{enh}(i) = h(i) * C_{raw}(i) = \sum_{j=-(k+l)}^{(k+l)} h(j)C_{raw}(i-j) \quad (3)$$

If 1 is defined by 2l+1 equals the total width of the smoothing filter function or about five times the resolution of f(i) and if samples are taken at four samples per foot, then about twenty-one depth samples represent a spread of about five feet. All the functions are normalized such that:

$$\sum_{i=-h}^{+h} g(i) = 1$$

$$\sum_{i=-l}^{l} f(i) = 1$$

$$\sum_{i=-(k+l)}^{k+l} h(i) = 1$$

Fig. 2(b) of the drawings shows a spatial response function. In accordance with the teachings of Czubek, see J.A. Czubek, *"Quantitative Interpretation of Gamma-Ray Logs in Presence of Random Noise"*, paper KKK, SPWLA 27th Ann Logging Symp., 1986, a simple gamma ray detector has a spatial response function which can be readily approximated. The approximation is given by the convolution of a rectangular box having a length which is equal or approximately equal to the detector's physical length with an exponential cusp function. See Fig. 2(a) for a representation of this. The cusp function has a decay constant which is related to the average gamma ray attenuation length in common reservoir functions for the borehole region. As a generalization, and relying in part on Czubek, the cusp decay function $\alpha$ has a value of approximately 3 feet $^{-1}$ for sedimentary formations.

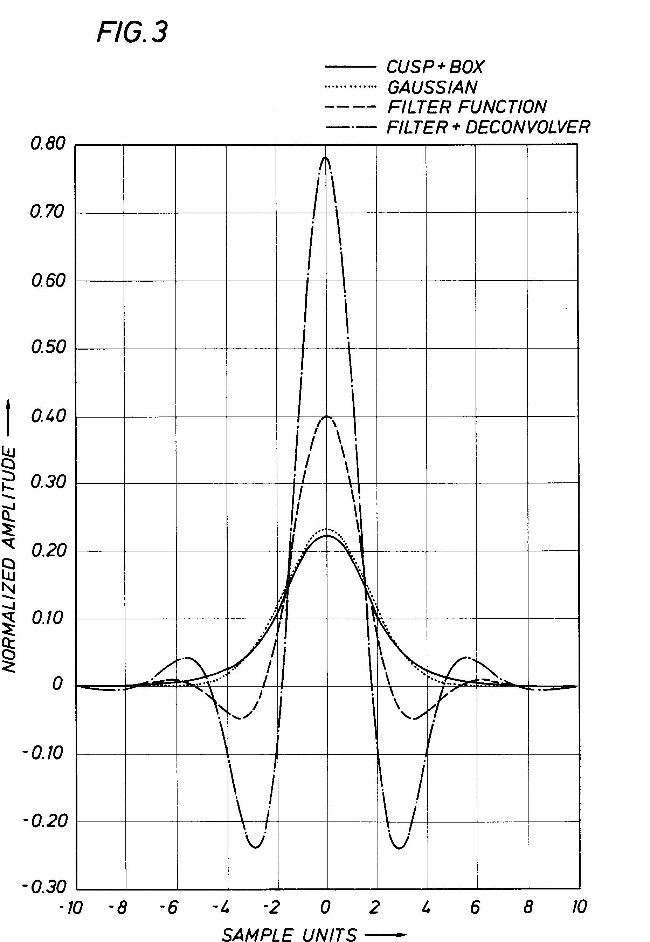

Fig. 2(b) of the drawings graphically represents the spatial deconvolution filter coefficients. The three point filter is similar to the same form used in the shoulder bed correction filters used for the last thirty years or so in processing of deep induction log data. The spatial coefficients (one being the current depth minus one sample, the second being the current depth, and the third being the current depth plus one sample) can be conveniently represented as -a, 2a+1, and -a where a is obtained from the cusp decay constant. If the decay constant is 3 feet$^{-1}$ and the sampling rate is a sample that is taken four per foot, then the value of a is 1.7. Fig. 3 of the drawings shows the response and smoothing filter functions assuming that one foot spatial resolution from the center is obtained. As will be observed with regard to Fig. 3 of the drawings, the cusp and box function is represented by the solid line, the Gaussian transfer function is represented by the dotted line, the filter function is represented by the closely spaced dash line while the filter and deconvolver are represented by the dash line with longer segments.

Response characteristics are set forth in Fig. 3 and are representative of that which would be obtained from a typical gamma ray logging tool. The filter function (short dashed curve) was derived from the Gaussian approximation (dotted curve) to the cups plus box (solid curve) of Fig. 3. One advantage is significantly reducing statistical noise due to excessive spatial sampling and minimizing degradation of the vertical resolution of the sensor.

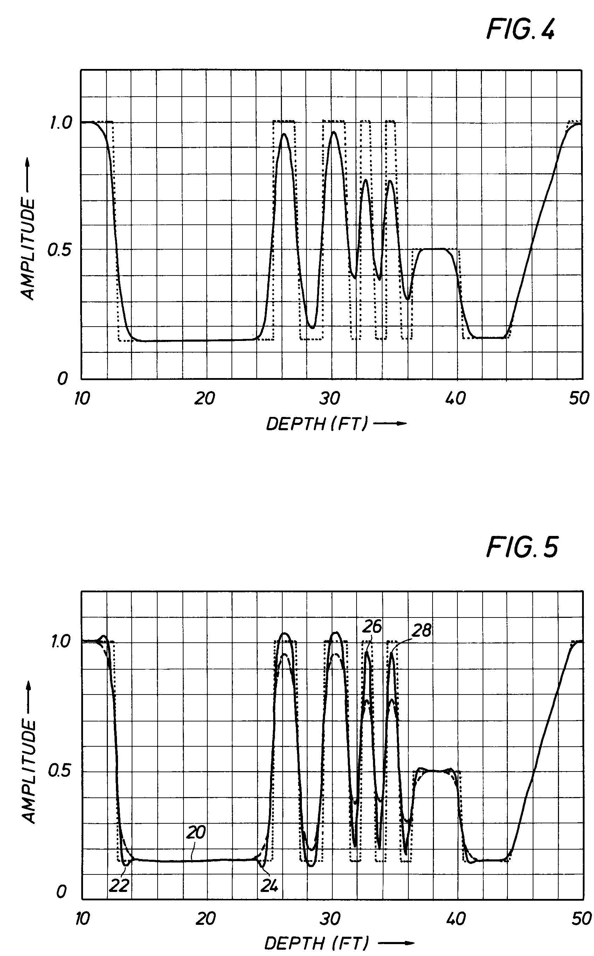

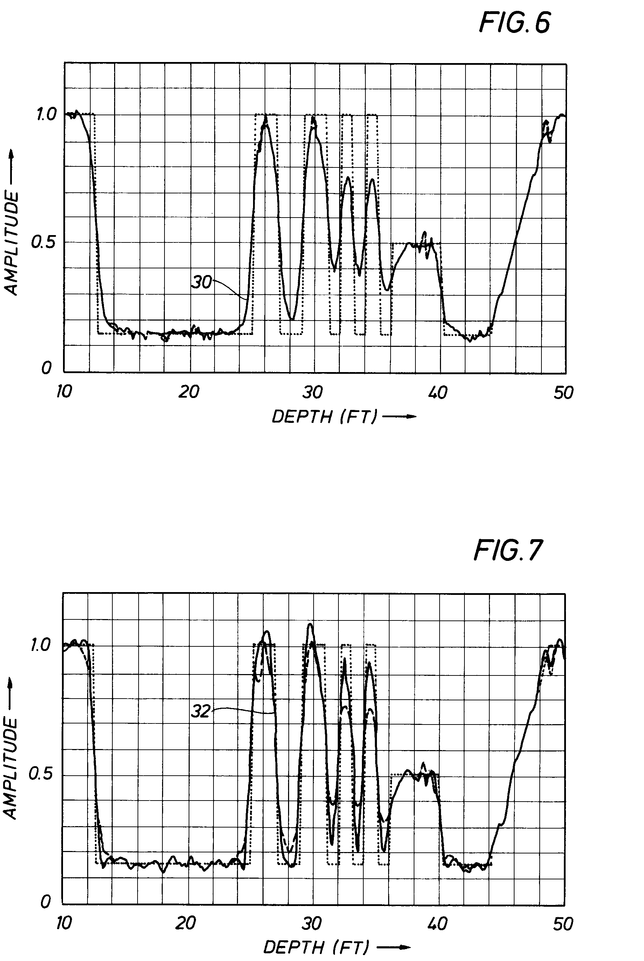

A simulated log profile is evaluated in Figs. 4 through 7 to show the benefit of the present system. As illustrated in Fig. 4, the noise free simulated formation response is the dotted line and it is smeared with a box plus cusp response. The solid curve shown in Fig. 4 shows the effect of a matched smoothing filter. It will be observed that there is no overshoot whatsoever in Fig. 4. Fig. 5 shows the same response as Fig. 4 except that it incorporates the benefits of a matched smoothing filter and a cusp deconvolver. There, the numeral 20 identifies the output. It will be further observed that the output has some overshoot as exemplified at the regions 22 and 24. Note also that the peak for the thin beds extends somewhat higher as exemplified at 26 and 28. This more nearly approximates the simulated formation source for the data. Fig. 6 is a similar view showing the same data from the same formation response which has been smeared with the box plus cusp response and which additionally has noise. The solid curve 30 shows the effect of a matched smoothing filter in the presence of noise. Fig. 7 is a view similar to Fig. 6 where the curve 32 showing the effect of the noise in the presence of a smoothing filter and deconvolver in accordance with the teachings of the present disclosure. In other words, the noise has been accommodated and it will be further seen that, while there is possibility of some noise enhancement, there is nevertheless a valid presentation of the simulated formation response, this being the solid line in Figs. 6 and 7. The bed boundaries are brought out in a sharp and contrasted fashion so that very thin formations are still represented with adequate bed boundaries.

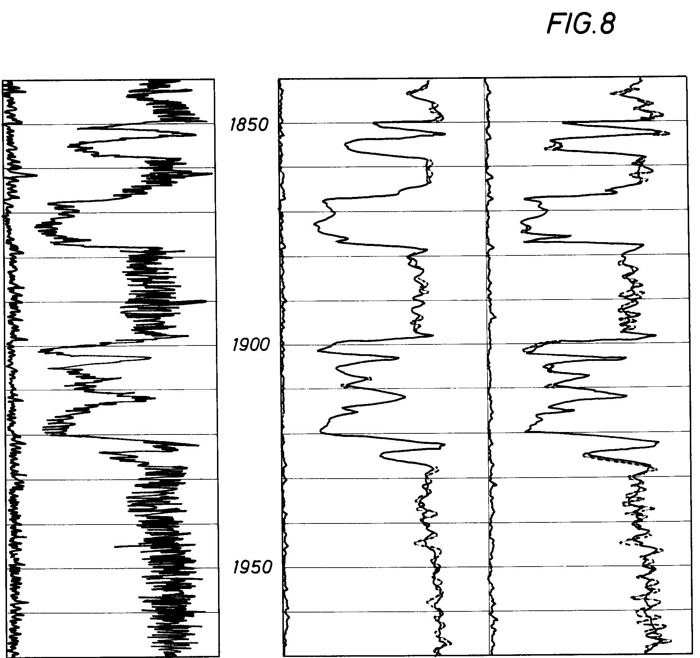

Fig. 8 of the drawings shows some data from a fully documented test well. This well was logged at a rate of about 1,800 feet per hour and ten samples per foot were taken. A sodium iodide detector crystal of eight inches length was used to obtain natural gamma ray data. The left trace in Fig. 8 is the raw data. In other words, it is the data without processing. The center data curve shows the left hand curve after application of only a smoothing filter. The right hand trace shows the smoothed and deconvolved output. In each trace, the individual logging passes are the lighter dash traces while the solid trace represents the average value. Full scale for each trace is 200 API units. It will be further noted that the second and third traces show at the base the standard deviation which is associated with the average in the respective traces.

There is a discernible thin bed of about 1.5 feet thickness located at a depth of about 1,851 feet. Oberve in the left hand trace of the raw data and compare it with its presentation enchanced in the smoothed trace, in the center, and even more so, the same data presentation made sharper and clearer in the smoothed and deconvolved trace at the right. In addition, there is a bed of about one foot thickness at 1,877 feet, and another bed of about 1.5 feet thickness at 1,903 feet. The deconvolution (contrast the third trace with the second trace) enhances certain of the smaller structure which would otherwise be lost, and for the particular beds noted, there is an enhanced minimum to maximum amplitude when compared with the raw or unprocessed data (see the left trace). The relative amplitude of the standard deviation curves for the center and right traces shows how the deconvolved log has increased uncertainty. In part, this results from the fact that the log was a natural gamma ray log which is normally recorded at a relatively low count rate so that statistical uncertainties are larger. Indeed, if the count rate is quite low, multiple passes may be necessary for date improvement. The present system thus operates even better for conditions where the count rates are relatively high rather than low. The right hand trace (which has been smoothed and deconvolved) is quite impressive in light of the fact that a low count rate was actually used. It is especially important to note that the relatively thin bed features have been properly presented and accented.

By contrast, when the logging tool includes its own source, the count rate is normally higher and statistical uncertainties are thus decreased and become less significant in that context. It would seem intuitive that logging runs involving nuclear sources - in the tool which result in higher count rates inevitably yield an improved statical uncertainty.

The foregoing can normally be carried out in real time as data is continuously supplied from the logging run. Filtering which yields the smoothing and the deconvolution steps set forth herein thus provides the improved data which is represented in Figs. 4-7 when considered in sequence, and which is considered in the three traces of Fig. 8. Generally, statistical uncertainties are not that important unless the count rate is extremely low. The present procedure can be applied to practically any log data and yields noticeable improvement in vertical resolution. This is accomplished at some risk, albeit modest, in log noise. In that event, statistical uncertainties still are nevertheless reduced even after filtering and deconvolving in contrast with the unfiltered log results. This is a surprisingly beneficial result which is obtained from what is otherwise a relatively simple combined filter and deconvolver which can otherwise be implemented in real time applications. Moreover, it permits the retention of the standard log value data computations which can be carried out elsewhere since the present procedure is best carried out by filtering when applied directly to the count rates from the logging tool. In other words, subsequent and separate processing is permitted even after the present procedure has been implemented.

## Claims

1. A method of presenting data from a logging tool traversing a well borehole wherein sensor means in the tool measures nuclear events which are output in the form of counts relating to nuclear events and wherein the output is smoothed and deconvolved by a filter means.

2. A method according to claim 1, wherein said filter means provides partial deconvolution sufficient to remove the equivalent of an exponential cusp function having a decay constant related to the average gamma ray attenuation length in reservoir formations common to the well borehole.

3. A method according to claim 2, wherein the smoothing occurs over a few feet of borehole.

4. A method according to claim 1,2 or 3, wherein the real time filtering is accomplished on the output data stream from the sensor means traversing the well borehole and wherein the data stream therefrom is smoothed and deconvolved.

5. A method according to claim 1,2,3 or 4, wherein the sensor means responds to naturally occurring nuclear events.

6. A method according to claim 1,2,3 or 4, wherein the sensor means responds to a nuclear source in a logging tool.

7. Apparatus for presenting a log of data along a well borehole comprising:
   (a) sensor means for responding to nuclear events along a well borehole;
   (b) filter means connected to the output of said sensor means for smoothing and partially deconvolving the data output from said sensor means as data smoothing occurs over a few feet of borehole.

8. Apparatus according to claim 7, wherein the filter means smoothes and deconvolves the data output from said sensor means.

*FIG.1*

*FIG.2a*

*FIG.2b*

FIG. 3

FIG. 4

FIG. 5

*FIG.6*

*FIG.7*

*FIG.8*